# EUROPÄISCHE PATENTSCHRIFT

(11) **EP 1 000 113 B1**
(45) Veröffentlichungstag und Bekanntmachung des Hinweises auf die Patenterteilung: **03.07.2002**
(21) Anmeldenummer: 98945036.6
(22) Anmeldetag: 23.07.1998
(51) Int. Cl.: C08J 3/12

(54) **VERFAHREN ZUR HERSTELLUNG VON REDISPERGIERBAREN PULVERN MIT GUTEM "INSTANT"-VERHALTEN**
METHOD FOR PRODUCING REDISPERSIBLE POWDERS WITH GOOD INSTANTANEOUS DISPERSION BEHAVIOUR
PROCEDE DE PRODUCTION DE POUDRES REDISPERSIBLES PRESENTANT UN BON COMPORTEMENT DE DISPERSION INSTANTANEE

(30) Priorität: 28.07.1997 DE 19732333
(43) Veröffentlichungstag der Anmeldung: 17.05.2000
(73) Patentinhaber: Buna Sow Leuna Olefinverbund GmbH, 06258 Schkopau (DE)
(72) Erfinder: ROTHENHÄUSSER, Bernd, D-06124 Halle (DE); KÜHN, Hartmut, D-06130 Halle (DE); ELSÄSSER, Dominik, CH-8833 Samstagern (CH); WALTER, Ulf-Jürgen, D-06217 Merseburg (DE); KIESEL, Volker, D-06122 Halle (DE)
(86) Internationale Anmeldenummer: DE9802072
(87) Internationale Veröffentlichungsnummer: WO9906474

(56) Entgegenhaltungen:
- EP-A- 0 056 622
- GB-A- 1 392 135
- DATABASE WPI Section Ch, Week 8324 Derwent Publications Ltd., London, GB; Class A18, AN 83-57296K XP002088021 & JP 58 074724 A (SUMITOMO CHEM CO LTD) , 6. Mai 1983

## Beschreibung

Die Erfindung betrifft redispergierbare Pulver für Klebstoffe, die sich durch ein sehr gutes "instant"-Verhalten auszeichnen.

Diese Kleber finden vor allem im Heimwerkerbereich, wo es nicht in jedem Fall möglich ist, durch Einsatz einer entsprechenden Technik eine intensive Durchmischung mit dem Anmachwasser vorzunehmen, Verwendung. ihre Einsatzgebiete sind hauptsächlich Fliesenkleber, Reparaturmörtel, Tapetenkleber und Trockenfarben.

Hierbei kommt es vor allem darauf an, daß die anwendungstechnische Komposition beim Einstreuen in Wasser schnell benetzt und sich klumpenfrei auflöst. Die Grundlage hierfür ist das "instant"-Verhalten des eingesetzten redispergierbaren Pulvers. Die setzt sich aus dem Redispergier- und Benetzungsverhalten des Pulvers zusammen.

Die Redispergierung ist eine wichtige Eigenschaft für die Güte eines Pulvers. Je höher der Redispergierbarkeitsgrad ist, um so mehr nähern sich die Eigenschaften der Redispersion denen der Ausgangsdispersion und er bestimmt damit das Eigenschaftsniveau des Pulvers.

Unter dem "instant"-Verhalten ist aber nicht nur der Grad der Redispersion zu verstehen, sondern vor allem das selbsttätige Auflöse- und Benetzungsverhalten eines Pulvers, das gewährleistet, daß auch ohne Einsatz einer intensiven Mischtechnik das Pulver klumpenfrei gelöst werden kann.

Während die Redispergierung eines Pulvers hauptsächlich von dem Sprühhilfsmittel beeinflußt wird, ist das Benetzungsverhalten durch die chemische Beschaffenheit der Oberfläche des Pulverkorns bestimmt. So kann es beispielsweise durch das auf der Oberfläche haftende Antiblockmittel und durch andere chemische Zusätze beeinflußt werden.

Hierzu zählen unter anderem hochdisperse Kieselsäuren, wie sie in der DE 2214410 beschrieben werden. Ihre Einsatzmengen betragen 4 bis 20 Gew.-% bezogen auf das verwendete Polyvinylacetat/Ethylen-Copolymere. So hergestellte Pulver weisen aber einen hohen Feinanteil auf und neigen damit zum Stauben. Weiterhin führt dies beim Einbringen in Wasser zu einer Klumpenneigung, die nur durch einen intensiven Mischvorgang behoben werden kann.

Die DE 2614261 beschreibt weiterhin in einem ähnlichen Verfahren den Einsatz von 2 bis 20 Gew.-% Kieselsäure als Antiblockmittel für Polyvinylacetat und andere Copolymere des Vinylacetates. Auch hier gelten die obengenannten Nachteile.

Außerdem sind in der DE 1719317 als hydrophile Antiblockmittel Alumiuniumsilikate, Kieselgur, Tone, Leichtspate, Zemente und Diatomeenerde in Mengen von 5 bis 20 Gew.-% aufgeführt.

Die DE 3101413 beschreibt dagegen den Einsatz von hydrophoben Silikaten in Mengen von 0,1 bis 2 Gew.-% für die Herstellung eines Pulvers auf Basis von Vinylestern.

Der Vorteil dieses Verfahrens besteht in der Herstellung eines staubfreien Pulvers, dessen aus der Redispersion gezogener Film transparent ist. Auch durch dieses Verfahren hergestellte Pulver benötigen einen intensiven Einmischvorgang.

Aufgabe der Erfindung ist es deshalb, ein Verfahren zu entwickeln, das es gestattet, Pulver herzustellen, die ein gutes "instant"-Verhalten aufweisen. Außer den bekannten Vorteilen der Staubfreiheit muß es sich außerdem durch ein gutes Blockverhalten und eine gute Redispergierbarkeit auszeichnen.

Die Aufgabe wird durch eine partielle Hydrophobierung der Pulveroberfläche erreicht, indem man die Dispersionen nach an sich bekanntem Verfahren mit einem hydrophilen Antiblockmittel versprüht und dem hydrophilen Antiblockmittel 0,1 bis 25 Gew.-%, vorzugsweise o,4 bis 8 Gew.-% eines Hydrophobierungsmittels, wie hydrophobe Kieselsäure zugibt .

Solche hydrophoben Kieselsäuren werden beispielsweise in der DE 3101413 beschrieben. Es handelt sich dabei um mit Dimethylchlorsiloxan modifizierte hydrophile Kieselsäuren. Die Modifizierung erfolgt dabei durch Umsetzung der Kieselsäure mit der entsprechenden Organochlorsiloxanverbindung.

Erfindungsgemäße Pulver sind Pulver auf Basis von Polyvinylacetat, Co- und Terpolymere des Polyvinylacetates wie beispielsweise Vinylacetat/Veova, Vinylacetat/Ethylen, oder Vinylacetat/Veova/Butylacrylat, Acrylate, sowie styrenhaltige Copolymere. Sie werden hergestellt, indem die Dispersion über einen Sprühtrocknungsprozeß aufgearbeitet wird.

Die nachstehenden Beispiele dienen zur weiteren Erläuterung der Erfindung und verdeutlichen die Vorzüge der erfindungsgemäßen Verfahrensweise anhand der erreichten Eigenschaftswerte.

Die Beispiele 1 und 2 stellen Vergleichsbeispiele dar, erläutern damit den Stand der Technik und sind nicht erfindungsgemäß.

In einem Sprühtrockner werden die in Tabelle 1 aufgeführten Dispersionen unter den angegebenen Zusätzen versprüht. In allen Fällen wurden rieselfähige Pulver erhalten.

**Tab. 1 :**

| Sprührezepturen der einzelnen Beispiele | | |
|---|---|---|
| **Beispiel** | **Polymer** | **modifiziertes Antiblockmittel** |
| 1 | 90 Gew.-% Vinylacetat 10 Gew.-% Ethylen | 15 Gew.-% Kieselsäure, hydrophil |
| 2 | 100 Gew.-% Vinylacetat | 2 Gew.-% hydrophobe Kieselsäure |
| 3 | 100 Gew.-% Vinylacetat | 10 Gew.-% Kieselsäure, hydrophil 0,5 Gew.-% Kieselsäure, hydrophob |
| 4 | 10 Gew.-% Ethylen 90 Gew.-% Vinylacetat | 8 Gew.-% Kieselsäure, hydrophil 0,6 Gew.-% Kieselsäure, hydrophob |
| 5 | 15 Gew.-% Ethylen 85 Gew.-% Vinylacetat | 15 Gew.-% Kieselsäure, hydrophil 0,8 Gew.-% Kieselsäure, hydrophob |
| 6 | 40 Gew.-% Veova 10 60 Gew.-% Vinylacetat | 20 Gew.-% Kieselsäure, hydrophil 1,6 Gew.-% Kieselsäure, hydrophob |
| 7 | 40 Gew.-% Veova 10 60 Gew.-% Vinylacetat | 10 Gew.-% Kieselsäure, hydrophil 0,1 Gew.-% Kieselsäure, hydrophob |
| 8 | 40 Gew.-% Veova 10 60 Gew.-% Vinylacetat | 10 Gew.-% Kieselsäure, hydrophil 0,15 Gew.-% Kieselsäure, hydrophob |
| 9 | 10 Gew.-% Butylacrylat 20 Gew.-% Veova 10 70 Gew.-% Vinylacetat | 15 Gew.-% Kieselsäure, hydrophil 0,2 Gew.-% Kieselsäure, hydrophob |
| 10 | 10 Gew.-% Butylacrylat 20 Gew.-% Veova 1o 70 Gew.-% Vinylacetat | 10 Gew.-% Kieselsäure, hydrophil 0,04 Gew.-% Kieselsäure, hydrophob |
| Veova 10 : Vinylester der Versaticsäure | | |

Von den entstandenen Pulvern wurde das Blockverhalten auf folgendem Weg bestimmt.

50 cm³ Pulver werden in einen Metallzylinder mit einem Innendurchmesser von 60 mm und einer Höhe von 150 mm gefüllt. Dann wird ein Stempel mit einem Gewicht von 5000 g eingesetzt und die Probe bei 20 °C 24 h gelagert.

Danach wird die Pulvertablette langsam aus den Zylinder gedrückt und unter Zuhilfenahme folgender Skala beurteilt:

| Blockfestigkeit | |
|---|---|
| Note | |
| 1 | keine Pulvertablette |
| 2 | Pulvertablette ist mit den Fingern nicht aufzunehmen. |
| 3 | Pulvertablette ist mit den Fingern aufzunehmen. |
| 4 | Pulvertablette zerfällt bei leichtem Fingerdruck. |
| 5 | Pulvertablette zerfällt bröcklig. |
| 6 | Pulvertablette bleibt fest geformt. |

Weiterhin wird das "instant"-Verhalten auf folgendem Wege bestimmt :
2 g Pulver werden mit einem Spatel auf eine Wasseroberfläche von
79 cm² (800 ml Becherglas) aus einer Höhe von 10 cm geschüttet und das Verhalten des Pulvers nach folgender Skala beurteilt:

| "instant"-Verhalten | |
|---|---|
| Note | |
| A | Das Pulver spreitet schnell ,füllt dabei die gesamte Oberfläche aus und sinkt klumpenfrei zu Boden. |
| B | Das Pulver spreitet langsam; bildet in der Oberfläche Inseln, die beim Absinken zu Klumpen führen. |
| C | Das Pulver spreitet kaum und bildet zum größten Teil Klumpen auf der Oberfläche |

Ein gutes "instant"-Verhalten drückt sich in einer Note A aus. Nur bei diesem Verhalten ist gewährleistet, daß sich das Endprodukt problemlos einmischen läßt.

Die Redispergierbarkeit des Pulvers wird über die Uneinheitlichkeit charakterisiert. Dazu werden von einer 10 %igen Redispersion mit einem Teilchengrößenmeßgerät das Volumen- und das Zahlenmittel der Teilchengröße bestimmt und daraus die Uneinheitlichkeit (U) berechnet. Eine Uneinheitlichkeit < 2 zeigt damit eine sehr gute Redispergierbarkeit an.

Die Eigenschaften der nach Tab.1 hergestellten Pulver sind in Tab. 2 zusammengefaßt.

**Tab. 2 :**

| Eigenschaften der in den Beispielen 1 bis 10 hergestellten Pulver | | | | | | |
|---|---|---|---|---|---|---|
| Beispiel | Restfeuchte (%) | Blockest [Note] | TG (mv) [nm] | TG (mn) [nm] | U (mv/mn)-1 [nm] | "instant"-Verhalten [Note] |
| 1 | 1,6 | 2 | 1680 | 940 | 0,79 | B |
| 2 | 1,5 | 1-2 | 1940 | 920 | 1,11 | C |
| 3 | 1,9 | 2 | 1720 | 960 | 0,79 | A |
| 4 | 1,45 | 1-2 | 2100 | 1000 | 1,10 | A |
| 5 | 1,55 | 1 | 2050 | 850 | 1,41 | A |
| 6 | 1,65 | 1 | 1960 | 890 | 1,20 | A |
| 7 | 1,45 | 1-2 | 1890 | 910 | 1,08 | A |
| 8 | 1,75 | 2 | 1950 | 930 | 1,10 | A |
| 9 | 1,4 | 1 | 2200 | 960 | 1,29 | A |
| 10 | 1,25 | 2 | 2400 | 940 | 1,55 | A |

Das Polymere aus Tab. 1 wurde gemäß der DE 2614261 in Emulsionsform mit der aufgeführten Antiblockmittelmischung versprüht. Es entstand ein freifließendes, redispergierbares Pulver mit einem guten Blockverhalten. Die Redispergierbarkeit des Pulvers konnte an Hand der Uneinheitlichkeit als sehr gut eingeschätzt werden.

Im "instant" Test erwies es sich jedoch als völlig unzureichend und mußte mit der Note B bewertet werden.

### Beispiel 2:

Das unter den in Tab. 1 aufgeführten Bedingungen gemäß DE 25144261 hergestellte Pulver war freifließend, zeigte ein sehr gutes Block- und Sedimentationsverhalten. Im "instant" Verhalten war es jedoch als sehr schlecht einzuschätzen (Note C), da auch nach intensivem Rühren noch eine größere Anzahl von Inseln auf der Oberfläche vorhanden waren.

### Beispiel 3:

Es wurde erfindungsgemäß nach Tab. 1 gearbeitet. Die Dispersion wurde in einem Sprühtrocknungsturm zu Pulver aufgearbeitet. Die Trocknereingangstemperatur betrug 120 °C, die Ausgangstemperatur 60 °C.

Das Antiblockmittel wurde als Mischung in den Sprühtrocknungsprozeß zugegeben. Es entstand ein freifließendes, blockfestes, gut redispergierbares Pulver, das außerdem ein ausgezeichnetes "instant" Verhalten aufwies.

### Beispiel 4

Es wurde gearbeitet wie in Beispiel 3,mit dem Unterschied, daß die entsprechende Sprühhilfsmittelmischung aus Tab. 1 eingesetzt wurde. Auch hier ergab sich ein Pulver, das freifließend und blockfest war, sowie ein sehr gutes "instant" Verhalten auswies.

### Beispiel 5:

Es wurde gearbeitet wie in Beispiel 3 mit den Einsatzmengen aus Tab. 1, mit dem Unterschied, daß der hydrophobe Anteil nach der Sprühtrocknung in einem Pulvermischer in das Pulver eingearbeitet wurde.

Auch hier entstand ein freifließendes , blockfestes Pulver mit einem sehr guten "instant" Verhalten.

### Beispiele 6 - 10:

Es wurde gearbeitet wie in Beispiel 3, mit dem Unterschied, daß die in Tab. 1 aufgeführten Mengen an hydrophober Kieselsäure der zu versprühenden Dispersion zugesetzt wurden.

Die entstandenen Pulver waren ebenfalls freifließend und zeigten eine sehr gute Blockfestigkeit. In allen Fällen zeigte sich erfindungsgemäß ein sehr gutes "instant"-Verhalten.

## Patentansprüche

1. Verfahren zur Herstellung von redispergierbaren Pulvern mit einem guten "instant"-Verhalten durch Sprühtrocknung nach an sich bekannter Art und Weise, **dadurch gekennzeichnet, daß** die Oberfläche der pulverförmigen Polymerkomposition partiell hydrophobiert wird, indem man dem hydrophilen Antiblockmittel bezogen auf seinen Gehalt 0,1 Gew.-% bis 25 Gew.-% eines hydrophoben Mittels zumischt.

2. Verfahren nach Anspruch 1, **dadurch gekennzeichnet, daß** 0,4 bis 8,0 Gew.-% eines hydrophoben Mittels zugemischt werden.

3. Verfahren nach den Ansprüchen 1 und 2, **dadurch gekennzeichnet, daß** als hydrophobes Mittel eine mit Dimethylchlorsiloxan modifizierte Kieselsäure eingesetzt wird.

4. Verfahren nach den Ansprüchen 1 bis 3, **dadurch gekennzeichnet, daß** als Polymere Polyvinylacetat, Co- und Terpplymere des Polyvinylacetates wie beispielsweise Vinylacetat/Versaticsäurevinylester, Vinylacetat/Ethylen, oder Vinylacetat/ Versaticsäurevinylester/Butylacrylat, Acrylate oder styrenhaltige Copolymere, sowie deren Mischungen eingesetzt werden.

## Claims

1. A process to produce re-dispersible powders with a good "instant" behavior through spray-drying by known methods, **characterized in that** the surface of the powdery polymer composition is partially hydrophobated through adding 0.1 to 25 percent by weight, relative to its share, of a hydrophobic agent to the hydrophilic antiblocking agent.

2. A process according to claim 1, **characterized in that** 0.4 to 8.0 percent by weight of a hydrophobic agent are added.

3. A process according to claims 1 and 2, **characterized in that** silicic acid modified with dimethyl chlorosiloxane is used as the hydrophobic agent.

4. A process according to claims 1 through 3, **characterized in that** polyvinyl acetate, copolymers and terpolymers of polyvinyl acetate such as vinyl acetate / versatic acid vinyl ester, vinyl acetate / ethylene or vinyl acetate / versatic acid vinyl ester / butyl acrylate, acrylates or styrene-containing copolymers or mixtures thereof are used as polymers.

## Revendications

1. Procédé de production de poudre redispersible à bon comportement "instantané" par séchage par pulvérisation **caractérisé par le fait que** selon la manière bien connue la surface de la composition pulvérulente de polymères sera partiellement rendue hydrophobe, dans la mesure où l'on ajoute, en mélangeant, un agent hydrophobe à l'agent anti-blocking hydrophile de 0,1 à 25 % en poids par rapport à sa teneur.

2. Procédé selon la revendication 1, **caractérisé par le fait que** l'on ajoutera par mélange de 0,4 à 8,0 % en poids d'un agent hydrophobe.

3. Procédé selon les revendications 1 et 2 **caractérisé par le fait que** l'agent hydrophobe à ajouter sera un acide silicique modifié avec du diméthylchlorosiloxane.

4. Procédé selon les revendications 1 et 3 **caractérisé par le fait que** les polymères utilisés sont l'acétate de polyvinyle, les copolymères et terpolymères de l'acétate de polyvinyle comme par exemple l'acétate vinylique/ester vinylique versatique, l'acétate vinylique/éthylène ou l'acétate vinylique/ester vinylique versatique/acrylate butylique, les acrylates ou des copolymères contenant du styrène ainsi que leurs mélanges.
